# FASCICULE DE BREVET EUROPEEN

(11) **EP 4 076 950 B1**
(45) Date de publication et mention de la délivrance du brevet: **06.12.2023**
(21) Numéro de dépôt: 20845588.1
(22) Date de dépôt: 16.12.2020
(51) Int. Cl.: B32B 17/10

(54) **VITRAGE FEUILLETE A COUCHE CHAUFFANTE AU MEME NIVEAU DE LA STRUCTURE FEUILLETEE QUE LE MASQUE DES AMENEES DE COURANT ELECTRIQUE DE LA COUCHE CHAUFFANTE**
VERBUNDGLASSCHEIBE MIT HEIZSCHICHT AUF DER GLEICHEN EBENE DER VERBUNDSTRUKTUR WIE DIE MASKE, DIE DIE ELEKTRISCHEN STROMLEITUNGEN DER HEIZSCHICHT ABSCHIRMT
LAMINATED GLASS PANEL WITH HEATING LAYER ON THE SAME LEVEL OF THE LAMINATED STRUCTURE AS THE MASK SHIELDING THE ELECTRICAL CURRENT LEADS OF THE HEATING LAYER

(30) Priorité: 19.12.2019 FR 1914857
(43) Date de publication de la demande: 26.10.2022
(73) Titulaire: Saint-Gobain Glass France, 92400 Courbevoie (FR)
(72) Inventeur: MAYEUX, Jean-Benoît, 45800 SAINT JEAN DE BRAYE (FR); ROUBY, Michel, 45460 BRAY EN VAL (FR)
(74) Mandataire: Saint-Gobain Recherche
(86) Numéro de dépôt international: PCT/FR2020/052460
(87) Numéro de publication internationale: WO 2021/123614

(56) Documents cités:
- WO-A1-2017/103428
- US-A1- 2017 041 987

## Description

La présente invention concerne un vitrage feuilleté à couche chauffante intégrée, que ce soit en vue d'une application pour un véhicule terrestre, automobile (pare-brise, lunette arrière), ferroviaire, blindé (y compris latérale chauffante), aquatique, ou pour le bâtiment.

Actuellement, le système chauffant intégré au vitrage feuilleté est alimenté par l'intermédiaire de deux amenées de courant électriques elles-mêmes intégrées au vitrage feuilleté et disposées en périphérie du système chauffant. Ces amenées sont disposées dans le clair de glace du vitrage.

Ces amenées peuvent être masquées pour une vision du côté de l'atmosphère extérieure mais aussi de l'intérieur du véhicule ou du bâtiment, au moyen d'un vernis ou d'une encre opaque, par exemple sérigraphiée, pour des raisons esthétiques (aspect des amenées) ou de furtivité (réfllexion lumineuse). Dans ce cas, le système chauffant n'est pas sur le même plan de la structure feuilletée (épaisseur de celle-ci) que le masque. Cette disposition a pour effet d'augmenter le volume et le poids du vitrage feuilleté, ce qui est un inconvénient.

Le système chauffant est un système à couche, simple ou multiples, pouvant comprendre une couche d'oxyde d'indium dopé à l'étain (en anglais Indium Tin Oxide - ITO -), une ou plusieurs couches d'argent.

Dans le cas de feuilles de verre minéral flotté, celles-ci présentent une face dite étain (en contact avec le bain d'étain fondu) et l'autre face dite air qui présente moins de microfissures que la face étain et est plus résistante mécaniquement. Pour cette raison la face air est positionnée de préférence vers l'intérieur du véhicule ou du bâtiment en présumant que c'est de l'extérieur qu'est susceptible de provenir un impact, la résistance mécanique du verre étant déterminante en extension sur la face de la feuille opposée à l'impact, c'est-à-dire intérieure. C'est donc sur une telle face air d'une feuille de verre minéral, en tous cas sur une face d'une feuille transparente, orientée vers l'intérieur du véhicule ou du bâtiment, qu'est déposée la couche chauffante. Il est bien entendu exclu que la couche chauffante soit directement accessible à l'utilisateur (car du courant électrique y circule), ce qui nécessite le feuilletage d'une feuille transparente supplémentaire vers l'intérieur du véhicule ou du bâtiment.

D'une part le positionnement du masque et du système chauffant dans deux plans différents de la structure feuilletée peut induire l'emploi de trois feuilles transparentes alourdissant le vitrage feuilleté, d'autre part il éloigne le système chauffant de la surface du vitrage en contact avec l'atmosphère extérieure, ce qui diminue l'efficacité de sa fonction antigivre, et/ou impose d'augmenter la puissance de chauffage.
WO 2017/103428 A1 divulgue un pare-brise feuilleté de véhicule, à signalétique lumineuse interne, comprenant un premier vitrage bombé, avec une première face principale dite F1, notamment destinée à être côté extérieur du véhicule, et une deuxième face principale opposée dite F2; un deuxième vitrage bombé, avec une troisième face principale dite F3 et une quatrième face principale opposée dite F4, notamment destinée à être côté intérieur du véhicule, l'un au moins des premier et deuxième vitrages étant en verre minéral et lesdits premier et deuxième vitrages étant reliés entre eux via les faces F2 et F3 par un intercalaire de feuilletage en une matière polymérique thermoformable, intercalaire comportant une première face principale de collage côté face F2 et une deuxième face principale de collage côté face F3; de préférence une première couche périphérique dite de masquage intérieur en matériau opaque, qui est entre la deuxième face de collage et la face F3 ou qui est sur la face F4, et/ou une deuxième couche périphérique dite de masquage extérieur en matière opaque, entre la première face de collage et la face F2, notamment en regard de la couche de masquage intérieur, voire en F1, et une première source de lumière pour une première signalétique. La face F3 peut dans certaines conditions comporter une couche chauffante, de préférence neutre en transmission, éventuellement sous la couche de masquage intérieur en F3, surmontée de premières et deuxièmes bandes d'amenée de courant typiquement sur les premier et deuxième bords longitudinaux, notamment opaques, par exemple en émail à l'argent.

Les inventeurs se sont donc attachés à la fois à la conception d'un vitrage chauffant plus léger, et dont la couche chauffante soit rapprochée de la face du vitrage en contact avec l'atmosphère extérieure.

A cet effet, l'invention a pour objet un vitrage feuilleté comprenant une première feuille transparente destinée, en position de montage du vitrage, à en constituer la face extérieure, une seconde feuille transparente collée à la première par l'intermédiaire d'une couche adhésive intercalaire, une couche chauffante alimentée en courant électrique par des amenées positionnées à la périphérie du vitrage, et un masque également positionné à la périphérie du vitrage entre la première feuille transparente et les amenées de manière à cacher ces dernières d'une vision de l'extérieur en position de montage du vitrage feuilleté, caractérisé en ce que la couche chauffante et le masque sont sur le même plan de la structure feuilletée du vitrage.

Grâce à l'invention, les amenées de courant électrique sont cachées d'une vision de l'extérieur du véhicule ou du bâtiment, sans que l'emploi d'un masque ne nécessite le feuilletage d'une feuille transparente supplémentaire vers l'extérieur.

Au sens de l'invention, la couche chauffante est d'une nature connue telle que désignée ci-dessus, notamment une couche ITO d'épaisseur comprise entre 50 et 800 nm (R/carré comprise entre 40 et 2 Ohm/carré) et comporte, notamment pour les vitrages de formes complexes s'écartant du rectangle, des zones de chauffage différenciées, gradient d'épaisseur de la couche, guidage du courant par lignes de séparation de flux obtenues par ablation laser de la couche conductrice, et tous perfectionnements utiles connus.

De préférence, la couche chauffante et le masque sont sur la face de la première feuille transparente opposée à celle en contact avec l'atmosphère extérieure.

De préférence, les amenées sont directement sur le masque.

De préférence, chaque amenée est reliée à la couche chauffante par un film conducteur transparent qui recouvre partiellement cette dernière. Il s'agit d'un film tel que de matériau polymère revêtu d'une couche électroconductrice.

De préférence, les première et seconde feuilles transparentes sont choisies, indépendamment l'une de l'autre, parmi une feuille de verre minéral tel que sodocalcique, aluminosilicate, borosilicate, éventuellement trempé thermiquement ou renforcé chimiquement, et une feuille de matériau polymère organique tel que poly (méthacrylate de méthyle) (PMMA), polycarbonate (PC), polyuréthane (PU), polyester tel que poly (téréphtalate d'éthylène) (PET).

Ces feuilles transparentes ont chacune une épaisseur comprise entre 0,1 et 20 mm, notamment au plus égale à 15, de préférence 12 mm. Un vitrage à fonction de blindage peut comporter une première feuille transparente de 12 mm de saphir (Al₂O₃ cristallin), verre minéral renforcé chimique tel qu'aluminosilicate ou PMMA, et une seconde feuille transparente aussi fine que de 0,18 mm d'épaisseur de PET à revêtement anti-rayure de polysiloxane, ou de 2,5 à 3 mm d'épaisseur de PC. Un vitrage automobile peut comporter une première et une seconde feuille transparente de verre minéral flotté, par exemple sodocalcique éventuellement trempé thermiquement, d'épaisseurs égales ou différentes l'une de l'autre, ne débordant pas sensiblement de l'intervalle entre 1,6 et 2,1 mm. Un vitrage de train peut comporter une première feuille transparente en verre minéral de 4 à 6 mm d'épaisseur et une seconde feuille transparente en verre minéral de 8 mm d'épaisseur environ.

De préférence, la couche adhésive intercalaire est choisie parmi les polyvinylbutyral (PVB), polyuréthane thermoplastique (TPU), éthylène-acétate de vinyle (EVA). Son épaisseur peut être par exemple de 0,38 mm environ dans un vitrage blindé, à 5 à 6 mm d'épaisseur dans un vitrage de train.

L'invention a également pour objet l'application d'un vitrage feuilleté tel que décrit ci-dessus pour un véhicule terrestre, automobile (pare-brise, lunette arrière), ferroviaire, blindé (y compris latérale chauffante), aquatique, ou pour le bâtiment.

Les dessins annexés illustrent l'invention :
[Fig. 1] représente schématiquement en coupe, un premier vitrage feuilleté de l'état de la technique.
[Fig. 2] représente schématiquement en coupe, un second vitrage feuilleté de l'état de la technique.
[Fig. 3] représente schématiquement en coupe un vitrage feuilleté conforme à l'invention.

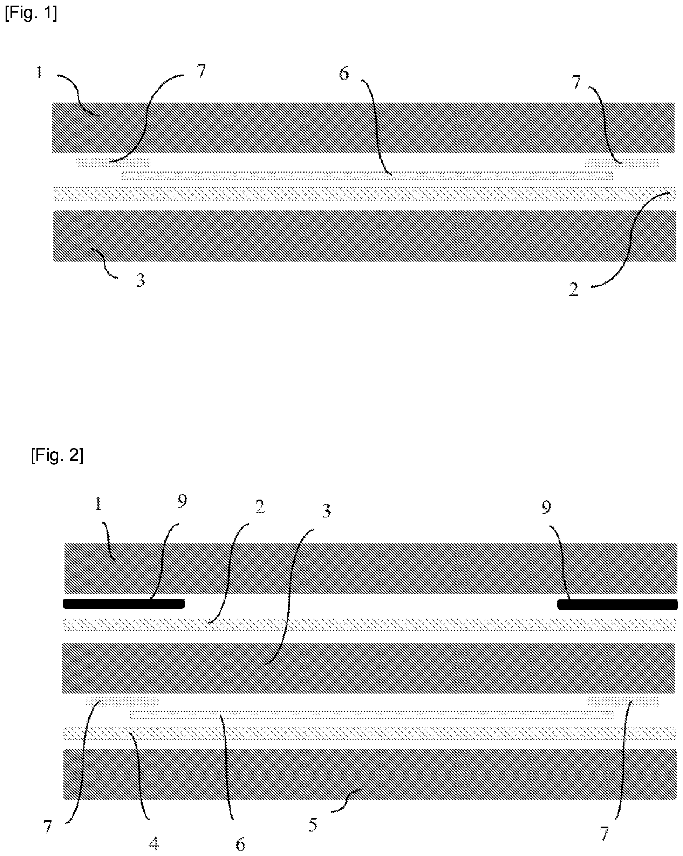

Sur la figure 1, un premier vitrage connu comprend une première feuille de verre flotté sodocalcique 1 trempée thermiquement de 1,6 mm d'épaisseur, destinée à être en contact avec l'atmosphère extérieure, et une seconde feuille de verre flotté sodocalcique 3 trempée thermiquement de 2,1 mm d'épaisseur, destinée à être en contact avec l'intérieur d'un véhicule automobile. Les feuilles de verre 1 et 3 sont collées par une couche 2 de PVB de 0,76 mm d'épaisseur. Sur la face de la première feuille de verre 1 orientée vers l'habitacle automobile, est déposée une couche conductrice chauffante 6 d'ITO de 200 nm d'épaisseur (résistance par carré de 10 Ohm/carré), reliée à une source de courant électrique par des amenées 7 en cuivre ou argent d'épaisseur comprise entre 0,2 et 1,5 mm, par exemple, en périphérie du vitrage feuilleté, et sur le même plan de la structure feuilletée que la couche chauffante 6. Les amenées sont dans le clair de vue du vitrage, la lumière peut s'y réfléchir de manière éblouissante pour un observateur à l'extérieur du véhicule automobile.

Les première et seconde feuilles de verre 1 et 3, ainsi que la couche de PVB 2 de la figure 2 sont identiques à celles de la figure 1. Cependant, dans la figure 2, une troisième feuille de verre flotté sodocalcique 5 trempée thermiquement de 1,6 mm d'épaisseur est collée à la seconde 3 par l'intermédiaire d'une seconde couche de PVB 4 de 0,76 mml d'épaisseur. C'est ici sur la face de la seconde feuille de verre 3 orientée vers l'habitacle automobile que sont déposées, sur ce même niveau ou plan de la structure feuilletée, la couche chauffante 6 et ses amenées 7 de courant électrique, toujours positionnées en périphérie, à deux bords opposés du vitrage. Un masque 9 de vernis sérigraphié est déposé sur la face de la première feuille de verre 1 orientée vers l'habitacle automobile, de sorte à cacher les amenées 7 d'une vision de l'extérieur de l'automobile.

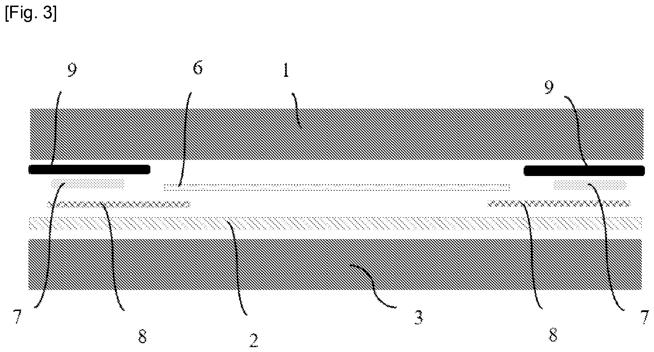

Conformément à l'invention, sur la figure 3, le masque 9 de vernis sérigraphié est également déposé sur la face de la première feuille de verre 1 orientée vers l'habitacle automobile, de même que la couche chauffante 6. Les amenées 7 sont déposées directement sur le masque 9, comme celui-ci à deux bords opposés du vitrage. La couche chauffante 6 est reliée électriquement à chaque amenée 7 par un film conducteur transparent 8 qui recouvre partiellement la couche chauffante 6. Le film conducteur 8 est commercialisé par la Société Eastman sous la marque enregistrée XIR^{®} 70HPS. Grâce à l'invention, les amenées sont masquées pour un regard de l'extérieur de l'automobile, dans une structure feuilletée légère à deux feuilles de verre seulement dans laquelle la couche chauffante 6 est protégée sur la face de la feuille de verre 1 extérieure orientée vers l'habitacle automobile, au plus près de la face du vitrage en contact avec l'atmosphère extérieure, de sorte à procurer la fonction de dégivrage de cette face pour une puissance de chauffage minimale.

## Revendications

1. Vitrage feuilleté comprenant une première feuille transparente (1) destinée, en position de montage du vitrage, à en constituer la face extérieure, une seconde feuille transparente (3) collée à la première (1) par l'intermédiaire d'une couche adhésive intercalaire (2), une couche chauffante (6) alimentée en courant électrique par des amenées (7) positionnées à la périphérie du vitrage, et un masque (9) également positionné à la périphérie du vitrage entre la première feuille transparente (1) et les amenées (7) de manière à cacher ces dernières (7) d'une vision de l'extérieur en position de montage du vitrage feuilleté, **caractérisé en ce que** la couche chauffante (6) et le masque (9) sont sur le même plan de la structure feuilletée du vitrage.

2. Vitrage feuilleté selon la revendication 1, **caractérisé en ce que** la couche chauffante (6) et le masque (9) sont sur la face de la première feuille transparente (1) opposée à celle en contact avec l'atmosphère extérieure.

3. Vitrage feuilleté selon l'une des revendications précédentes, **caractérisé en ce que** les amenées (7) sont directement sur le masque (9).

4. Vitrage feuilleté selon l'une des revendications précédentes, **caractérisé en ce que** chaque amenée (7) est reliée à la couche chauffante (6) par un film conducteur transparent (8) qui recouvre partiellement cette dernière (6).

5. Vitrage feuilleté selon l'une des revendications précédentes, **caractérisé en ce que** les première (1) et seconde (3) feuilles transparentes sont choisies, indépendamment l'une de l'autre, parmi une feuille de verre minéral tel que sodocalcique, aluminosilicate, borosilicate, éventuellement trempé thermiquement ou renforcé chimiquement, et une feuille de matériau polymère organique tel que poly(méthacrylate de méthyle) (PMMA), polycarbonate (PC), polyuréthane (PU), polyester tel que poly(téréphtalate d'éthylène) (PET).

6. Vitrage feuilleté selon l'une des revendications précédentes, **caractérisé en ce que** la couche adhésive intercalaire (2) est choisie parmi les polyvinylbutyral (PVB), polyuréthane thermoplastique (TPU), éthylène-acétate de vinyle (EVA).

7. Application d'un vitrage feuilleté selon l'une des revendications précédentes pour un véhicule terrestre, automobile (pare-brise, lunette arrière), ferroviaire, blindé (y compris latérale chauffante), aquatique, ou pour le bâtiment.

## Patentansprüche

1. Verbundglasscheibe, umfassend eine erste transparente Scheibe (1), die dafür bestimmt ist, in Montageposition der Verglasung, die Außenfläche zu bilden, eine zweite transparente Scheibe (3), die an die erste (1) über eine Zwischenlagenhaftschicht (2) geklebt ist, eine Heizschicht (6), die durch Zuleitungen (7) mit elektrischem Strom versorgt wird, die an dem Umfang der Verglasung positioniert sind, und eine Maske (9), die auch an dem Umfang der Verglasung zwischen der ersten transparenten Scheibe (1) und den Zuleitungen (7) positioniert ist, um die letzten (7) von einer Ansicht von außen in Montageposition der Verbundglasscheibe zu verbergen,
**dadurch gekennzeichnet, dass** die Heizschicht (6) und die Maske (9) sich auf derselben Ebene der Verbundstruktur der Verglasung befinden.

2. Verbundglasscheibe nach Anspruch 1, **dadurch gekennzeichnet, dass** die Heizschicht (6) und die Maske (9) auf der Fläche der ersten transparenten Scheibe (1) gegenüber der in Kontakt mit der Außenatmosphäre sind.

3. Verbundglasscheibe nach einem der vorstehenden Ansprüche,
**dadurch gekennzeichnet, dass** die Zuleitungen (7) direkt auf der Maske (9) liegen.

4. Verbundglasscheibe nach einem der vorstehenden Ansprüche,
**dadurch gekennzeichnet, dass** jede Zuleitung (7) mit der Heizschicht (6) durch einen transparenten leitfähigen Film (8) verbunden ist, der diese letzte (6) teilweise bedeckt.

5. Verbundglasscheibe nach einem der vorstehenden Ansprüche,
**dadurch gekennzeichnet, dass** die erste (1) und die zweite (3) transparente Scheibe unabhängig voneinander aus einer Scheibe aus Mineralglas wie zum Beispiel Natronkalk, Aluminosilicat, Borosilicat, optional thermisch gehärtetes oder chemisch verstärktes Polymermaterial und einer Scheibe aus organischem Polymermaterial wie zum Beispiel Poly(methylmethacrylat) (PMMA), Polycarbonat (PC), Polyurethan (PU), Polyester, wie zum Beispiel Poly(ethylenterephthalat) (PET) ausgewählt sind.

6. Verbundglasscheibe nach einem der vorstehenden Ansprüche,
**dadurch gekennzeichnet, dass** die Zwischenlagenhaftschicht (2) aus Polyvinylbutyral (PVB), thermoplastischem Polyurethan (TPU), Ethylenvinylacetat (EVA) ausgewählt ist.

7. Anwendung einer Verbundglasscheibe nach einem der vorstehenden Ansprüche für ein Landfahrzeug, ein Kraftfahrzeug (Windschutzscheibe, Heckscheibe), ein Schienenfahrzeug, ein Panzerfahrzeug (einschließlich Heizseite), ein Wasserfahrzeug oder für das Gebäude.

## Claims

1. A laminated glazing comprising a first transparent sheet (1) intended, in the mounting position of the glazing, to constitute the exterior face thereof, a second transparent sheet (3) bonded to the first (1) by means of an adhesive interlayer (2), a heating layer (6) supplied with electric current by leads (7) positioned at the periphery of the glazing, and a mask (9) also positioned at the periphery of the glazing between the first transparent sheet (1) and the leads (7) so as to hide the latter (7) from view from the outside in the mounting position of the laminated glazing, **characterized in that** the heating layer (6) and the mask (9) are on the same plane of the laminated structure of the glazing.

2. The laminated glazing as claimed in claim 1, **characterized in that** the heating layer (6) and the mask (9) are on the face of the first transparent sheet (1) opposite the one in contact with the outside atmosphere.

3. The laminated glazing as claimed in either of the preceding claims, **characterized in that** the leads (7) are directly on the mask (9).

4. The laminated glazing as claimed in one of the preceding claims, **characterized in that** each lead (7) is connected to the heating layer (6) by a transparent conductive film (8) which partially covers the latter (6).

5. The laminated glazing as claimed in one of the preceding claims, **characterized in that** the first (1) and second (3) transparent sheets are chosen, independently of one another, from a sheet of mineral glass such as soda-lime, aluminosilicate or borosilicate glass, optionally thermally tempered or chemically toughened, and a sheet of organic polymer material such as poly(methyl methacrylate) (PMMA), polycarbonate (PC), polyurethane (PU), polyester such as poly(ethylene terephthalate) (PET).

6. The laminated glazing as claimed in one of the preceding claims, **characterized in that** the adhesive interlayer (2) is chosen from polyvinyl butyral (PVB), thermoplastic polyurethane (TPU), ethylene-vinyl acetate (EVA).

7. An application of a laminated glazing as claimed in one of the preceding claims for a terrestrial vehicle, motor vehicle (windshield, back window), railroad vehicle, armored vehicle (including heating side), waterborne vehicle, or for buildings.
